(19) Europäisches Patentamt
European Patent Office
Office européen des brevets

(11) Publication number: **0 389 640 B1**

(12) # EUROPEAN PATENT SPECIFICATION

(45) Date of publication of patent specification: **03.05.95**

(51) Int. Cl.$^6$: **C08K 3/32**, C08K 5/34, C08L 101/00, C08L 23/00

(21) Application number: **89910200.8**

(22) Date of filing: **07.09.89**

(86) International application number: **PCT/JP89/00924**

(87) International publication number: **WO 90/02772 (22.03.90 90/07)**

The file contains technical information submitted after the application was filed and not included in this specification

(54) **RESIN COMPOSITION HAVING EXCELLENT HEAT STABILITY AND WEATHERABILITY.**

(30) Priority: **09.09.88 JP 226794/88**

(43) Date of publication of application: **03.10.90 Bulletin 90/40**

(45) Publication of the grant of the patent: **03.05.95 Bulletin 95/18**

(84) Designated Contracting States: **DE FR GB IT NL**

(56) References cited:
**DE-A- 3 233 951**
**DE-A- 3 233 952**
**FR-A- 2 592 386**
**US-A- 4 328 132**

(73) Proprietor: **SUMITOMO CHEMICAL COMPANY, LIMITED**
**5-33, Kitahama 4-chome**
**Chuo-ku**
**Osaka (JP)**

(72) Inventor: **KITAMURA, Shuji**
**2-15-3, Kayogaoka**
**Nagaokakyo-shi**
**Kyoto 617 (JP)**
Inventor: **NAKAE, Kiyohiko**
**2-10-16, Sakuragaoka**
**Setagaya-ku**
**Tokyo 156 (JP)**
Inventor: **KOTANI, Kozo**
**1-6-8, Shiroyama-cho**
**Toyonaka-shi**
**Osaka 561 (JP)**
Inventor: **SAKAYA, Taiichi**
**1-2-40, Hirata, Ibaraki-shi**
**Osaka 567 (JP)**

(74) Representative: **VOSSIUS & PARTNER**
**Postfach 86 07 67**
**D-81634 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 389 640 B1

## Description

The present invention relates to a resin composition with good heat stability and weather resistance. More particularly, the present invention relates to a resin composition which has good heat stability and weather resistance and comprises a resin, a heat stabilizer, a hindered-amine based weathering stabilizer and a hypophosphite compound.

The amount of the resins which are used outdoors is increasing year by year. Such outdoor use resins are required to have weather resistance according to the applications. To this end, various weathering stabilizers have been developed. Recently, hindered-amine based weathering stabilizer, which are so-called hindered amine light stabilizers (HALS) are often used, since they can prevent decrease of the mechanical properties or change of color tone of the resin compositions when subjected to the outdoor weathering much better than the conventional weathering stabilizers (cf. Japanese Patent Kokai Publication No. 86645/1984).

Since the weathering stabilizer cannot impart processing stability or heat stability to the resins, a heat stabilizer (e.g. hindered-phenol based heat stabilizers, sulfur based heat stabilizers and phosphite ester based heat stabilizers) is generally added to the resin composition.

However, the resin composition comprising the heat stabilizer and the hindered-amine based weathering stabilizer may suffer from deterioration such as gellation or seizing during processing or discoloration just after processing under certain conditions, or suffer from deterioration due to poor weather resistance such as decrease of the mechanical properties, or change of gloss or color tone. Therefore, the heat stability and weather resistance of the resin are not satisfactory. Of course, the increase of the added amount of the heat stabilizer and the hindered-amine based weathering stabilizer will improve the heat stability and the weather resistance of the resin composition to some extent. However, the resins are yellowed, or the heat stabilizer and/or the hindered-amine based weathering stabilizer are bled out onto the surface of an article molded from the resin composition so that appearance of the article is impaired.

One object of the present invention is to provide a resin composition which comprises a heat stabilizer and a hindered-amine based weathering stabilizer and has considerably improved heat stability and weathering stability.

To achieve this object, the present inventors have studied the resin compositions, particularly the resin compositions comprising the heat stabilizer and the hindered-amine based weathering stabilizer.

As the results of such study, it has been found that the addition of the hypophosphite compound to the resin composition comprising the heat stability and the hindered-amine based weathering stabilizer greatly improves the heat stability and the weathering stability of the resin composition, and the present invention has been completed.

Accordingly, the present invention provides a resin composition having good heat stability and weather resistance, comprising an olefin polymer, a heat stabilizer, a hindered-amine weathering stabilizer and a hypophosphite compound, characterized in that said heat stabilizer is at least one member selected from the group consisting of 2,6-dialkylphenol derivatives, 2-alkylphenol derivatives, sulfur-containing compounds having a thiol or thioether linkage containing a divalent sulfur atom and compounds having a phosphite ester linkage containing a trivalent phosphorus atom, and said hindered-amine weathering stabilizer is at least one member selected from the group consisting of 2,2,6,6-tetralkylpiperidine derivative having a substituent at the 4-position and a molecular weight of not smaller than 250.

The heat stabilizers to be used in the present invention, are hindered-phenol compounds, namely 2,6-dialkylphenol derivatives and 2-alkylphenol derivatives, sulfur-containing compounds having a thiol or thioether linkage containing a divalent sulfur atom, or compounds having a phosphite ester linkage containing a trivalent phosphorus atom.

Examples of the hindered phenol based heat stabilizer are following compounds (1) through (8):

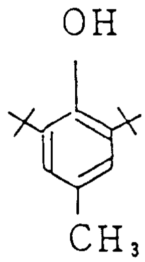

(1)

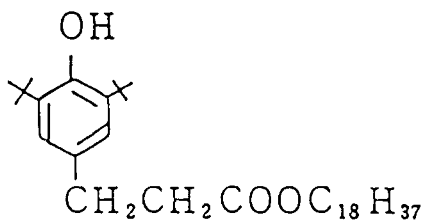

(2)

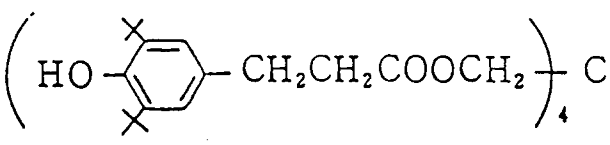

(3)

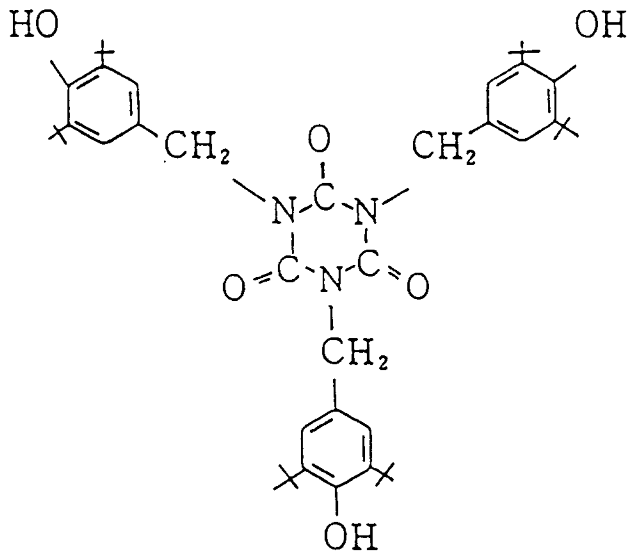

(4)

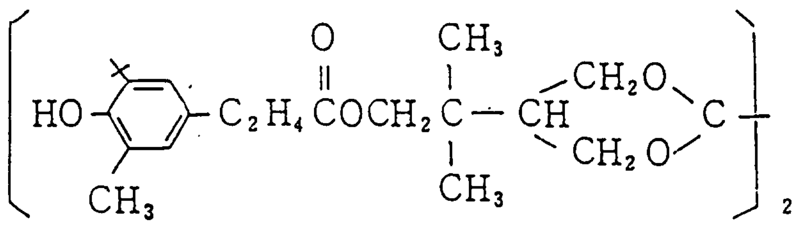

(5)

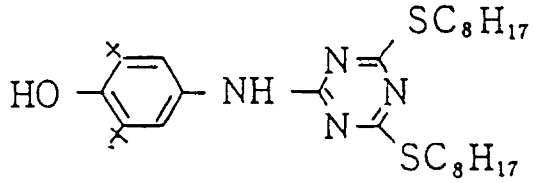

(6)

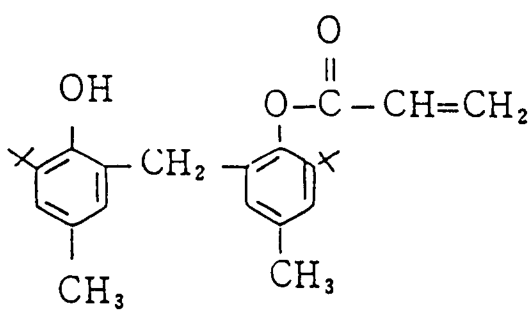

(7)

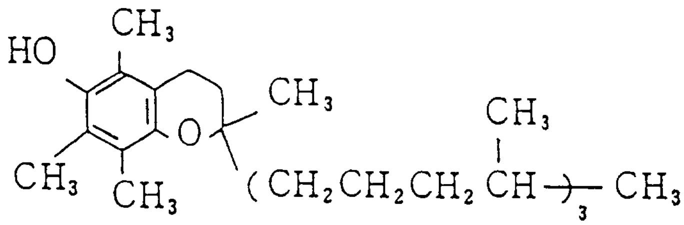

(8)

Examples of the sulfur-containing heat stabilizer are following compounds (9) through (16):

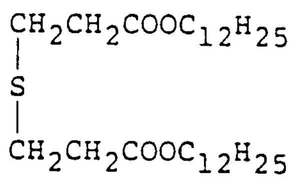

(9)

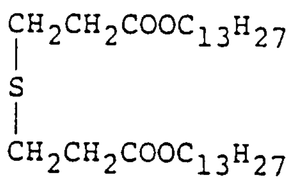

(10)

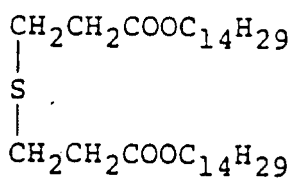

(11)

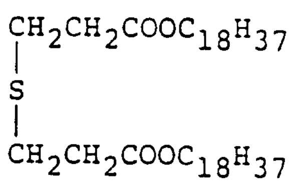

(12)

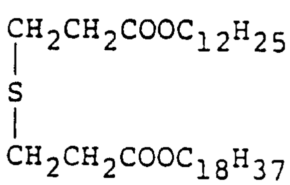

(13)

$(H_{25}C_{12}SCH_2CH_2COOCH_2)_4C$ (14)

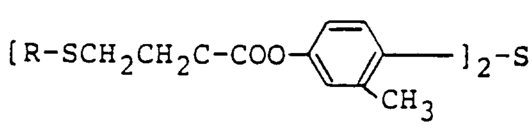

(15)

wherein R is an alkyl group having 12 to 14 carbon atoms

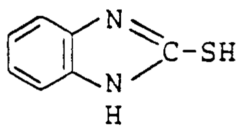

(16)

Examples of the phosphite ester based heat stabilizer are following compounds (17) through (33):

$P{\leftarrow}O\text{-}C_{10}H_{21})_3$ (17)

$P{\leftarrow}O\text{-}C_{13}H_{27})_3$ (18)

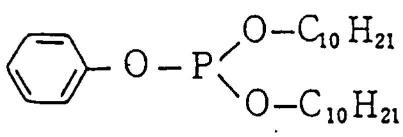

(19)

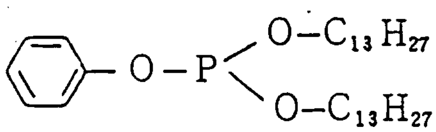

(20)

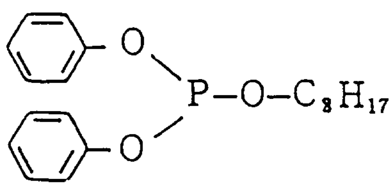

(21)

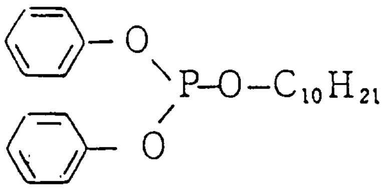

(22)

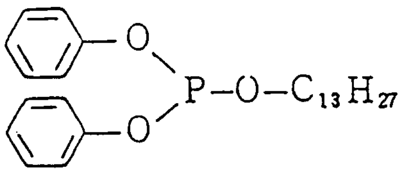

(23)

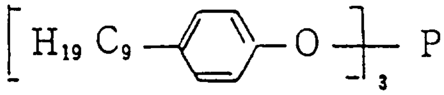

(24)

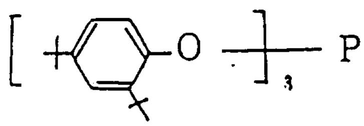

(25)

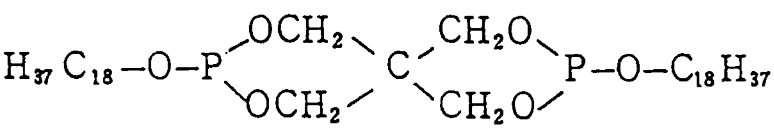

(26)

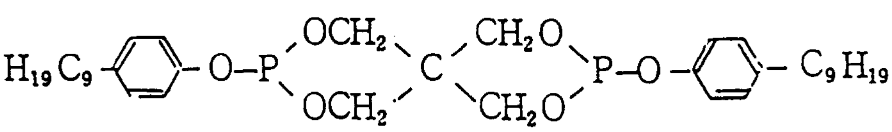

(27)

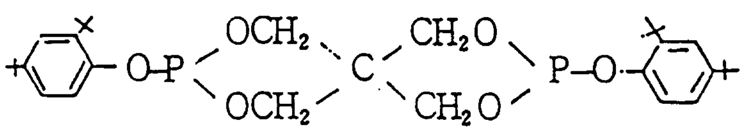

(28)

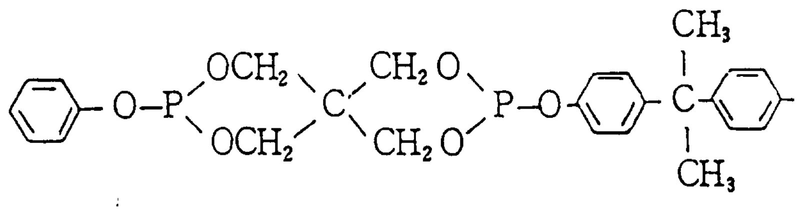 (29)

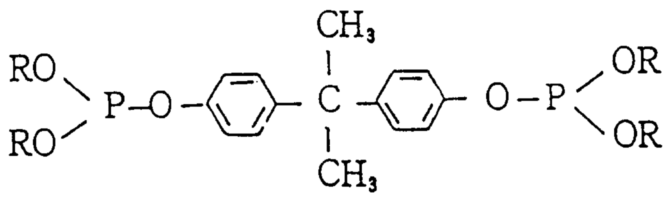 (30)

wherein R is an alkyl group having 12 through 15 carbon atoms

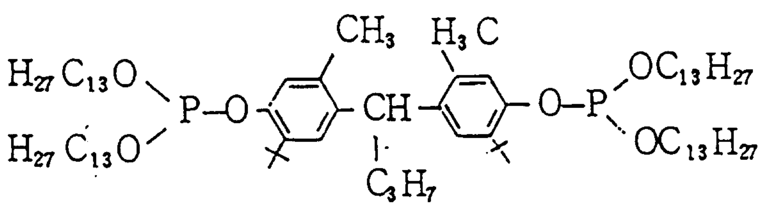 (31)

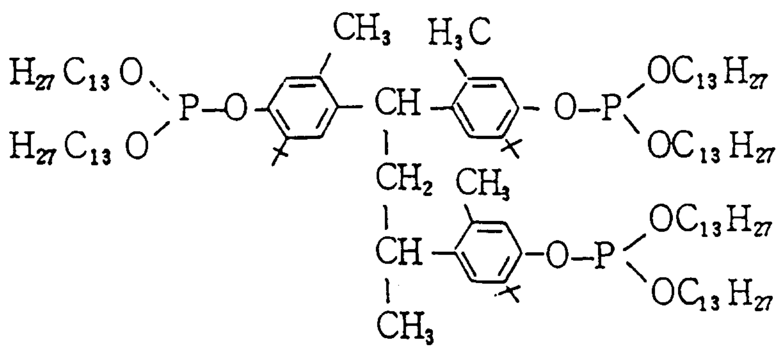 (32)

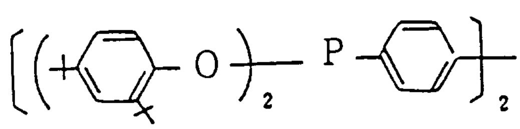 (33)

The above heat stabilizer may be used independently or as a mixture thereof.

The hindered-amine based weathering stabilizer is at least one member, selected from the group consisting of 2,2,6,6-tetralkylpiperidine derivatives having a substituent at the 4-position and a molecular weight of not smaller than 250. As the substituent at the 4-position, are exemplified a carboxylic acid residue, an alkoxy group, an alkylamino group and the like. The N-position may be substituted. Specific examples of the hindered-amine based weathering stabilizer are following compounds (34) through (41):

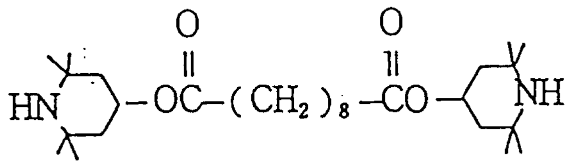

(34)

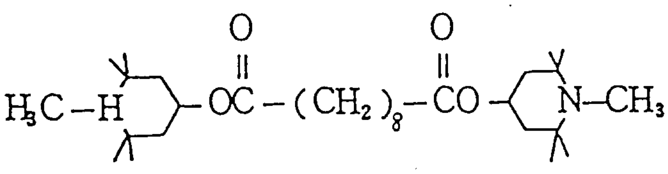

(35)

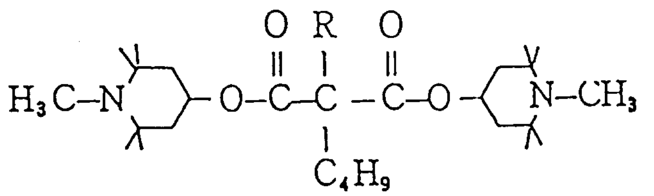

(36)

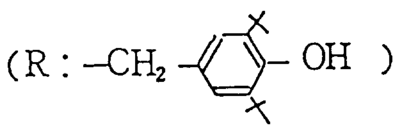

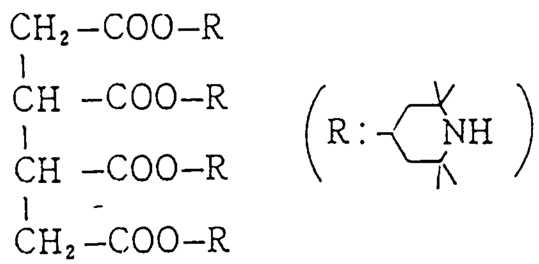

(37)

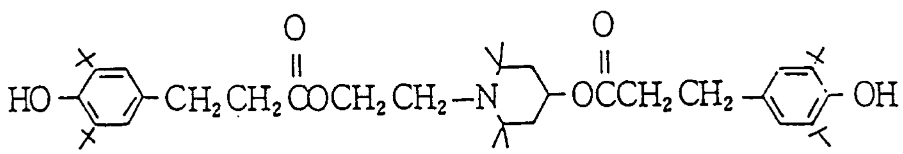

(38)

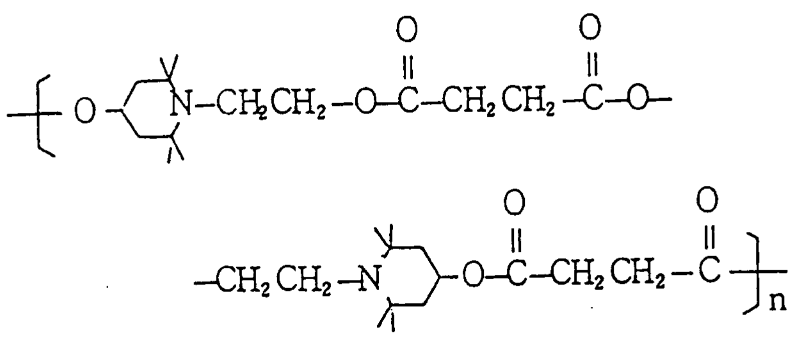

(39)

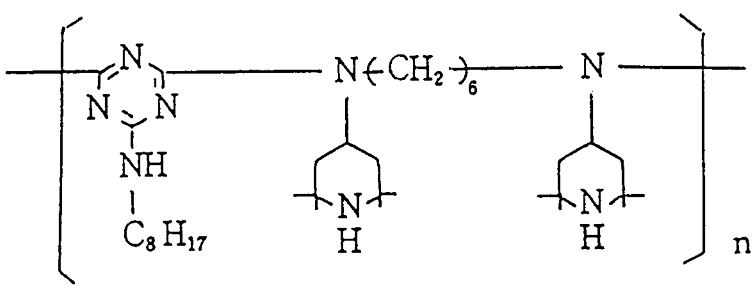

(40)

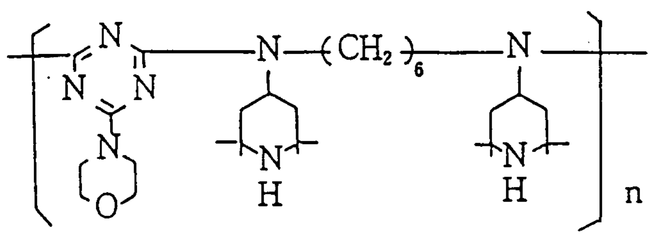

(41)

The hypophosphite compound to be used according to the present invention is expressed by the formula (A)

$X_a(H_2PO_2)_b$ (A)

wherein X is a metal ion, an ammonium ion or a quaternary phosphonium ion, a and b are positive numbers provided that they satisfy the equation: a x c = b in which c is a valency of X.

Specific examples of the compound (A) are lithium hypophosphite, sodium hypophosphite, potassium hypophosphite, magnesium hypophosphite, calcium hypophosphite, zinc hypophosphite, titanium hypophosphite, vanadium hypophosphite, molybdenum hypophosphite, manganese hypophosphite, cobalt hypophosphite, ammonium hypophosphite, butylammonium hypophosphite, diethylammonium hypophosphite, triethylammonium hypophosphite, tetraethylammonium hypophosphite, tetrabutylphosphonium hypophosphite and tetraphenylphosphonium hypophosphite.

Examples of the resin to be used according to the present invention are olefin polymers such as polyethylene, polypropylene, poly-1-butene, poly-4-methyl-1-pentene, ethylene-propylene block copolymer, ethylene-propylene random copolymer, ethylene-1-butene copolymer, ethylene-1-hexene copolymer, ethylene-4-methyl-1-pentene copolymer, ethylene-1-octene copolymer, propylene-1-butene copolymer, copolymers of an olefin and a polar vinyl compound such as ethylene-1-vinyl acetate copolymer and ethylene-methyl methacrylate copolymer and ionomer resins, acrylic resins such as polymethyl methacrylate, polyester resins, polyamide resins, polycarbonate resins, phenol resins, polyvinyl chloride resins and polyurethane resins.

The amounts of components contained in the resin composition of the present invention are as follows:

The heat stabilizer is used in an amount of 0.01 to 10 parts by weight, preferably 0.05 to 1 part by weight per 100 parts by weight of the resin. When this amount is less than 0.01 part by weight, the heat stability is not effectively improved. When this amount exceeds 10 parts by weight, the heat stability is not significantly improved and such larger amount is not economical. In addition, the heat stabilizer may unpreferably bleed out or discolor.

The hindered-amine based weathering stabilizer is used in an amount of 0.01 to 10 parts by weight per 100 parts by weight of the resin. When this amount is less than 0.01 part by weight, the weather resistance is not effectively improved. When this amount exceeds 10 parts by weight, the weather resistance is not further improved and such larger amount is not economical. In addition, the weathering stabilizer may unpreferably bleed out or discolor.

The added amount of the hypophosphite compound is usually at least 0.05 part by weight, preferably at least 0.1 part by weight per one part of the hindered-amine based weathering stabilizer. When this amount is less than 0.05 part, the heat stability and the weather resistance are not effectively improved.

The resin composition of the present invention may contain a UV light absorber, an anti-fogging agent, an anti-static agent, a lubricant, a filler, a flame retardant and a pigment in such amount that the effects of the present invention are not deteriorated.

The compounding manner of the above components is not critical, and the components are compounded by an usual means such as a Banbury mixer, a mixing roll and an extruder.

According to the present invention, addition of the hypophosphite compound to the resin composition containing the heat stabilizer and the hindered-amine weather stabilizer gives the resin composition having greatly improved heat stability and weather resistance.

As demonstrated in the below described Examples, by the use of the hypophosphite compound together with the heat stabilizer and the hindered-amine based weather stabilizer, the heat stability and the weather resistance are significantly improved in comparison with a resin composition containing no hypophosphite compound. In addition, the hypophosphite compound largely decrease discoloring of the stored resin composition which is often found in the resin composition containing the hindered-amine based weather stabilizer.

The resin composition of the present invention is molded in the form of a film, a sheet, fibers and a molded article and used in various fields such as an agricultural film, and an automobile parts material. In particular, the film produced from the resin composition of the present invention comprising, as the resin, the polyolefin such as polyethylene or the ethylene-1-butene copolymer is very useful as a wrapping film and a covering material for agricultural green houses or tunnels. The resin composition of the present invention is useful as a material for outdoor use such as automobile parts, for example, a bumper or construction materials such as a roof of a garage.

## EXAMPLES

The present invention will be illustrated by following Examples.

The test methods in Examples are as follows:

Weathering test (1)

A test sample in the form of a JIS No. 3 dumbbell is aged with a Standard Sunshine Super Long-Life Weather Meter (trade mark) (manufactured by Suga Test Instruments Co., Ltd.) at a black panel temperature of 83°C with showering for 18 minutes every two hours. The aged sample is subjected to tensile test with an Autograph (trade mark) DSS 100 (manufactured by Shimadzu Co.) to measure elongation (%) and then the weathering test time at which the elongation decreases to a half of the original value (a half value period of weather resistance) is recorded. The larger half value period means better weather resistance.

Weathering test (2)

A test sample of 2 mm in thickness in the form of a JIS No. 3 dumbbell prepared by injection molding is aged with an Eye Super UV Tester (trade mark) SUV-W 11 (manufactured by Eye Graphics Co., Ltd.) at a black panel temperature of 83°C and a relative humidity of 30 %. A surface of the aged sample is observed with an optical microscope (100 times magnification) to inspect the presence of cracks and their conditions. Then, the degree of deterioration is evaluated according to the following standards:

A: No crack.
B: A few cracks.
C: Many cracks.
D: Cracks grow and the sample is broken.

Heat stability test (1)

With a test sample of 1 mm in thickness (1 g), an induction period for oxygen absorption is measured by a measurement apparatus for polymer deterioration (manufactured by Shibayama Scientific Co., Ltd.) at a vessel internal temperature of 220°C with an oxygen amount of 40 ml in a dark place. The induction period for oxygen absorption is expressed by a time period till the oxygen amount decreases by 0.9 ml or the internal oxygen volume indicates the minimum value when decomposed gases are generated, after the vessel temperature is stabilized. The longer induction period for oxygen absorption means better resistance to oxidative degradation, namely better heat stability.

Heat stability test (2)

A test sample of 2 mm in thickness is aged in an oven at 180°C in the air for 20 hours and press molded to form a film having a thickness of 50 µm. With this film, an IR spectrum is measured, and absorbancy due to stretching vibration of carbonyl groups at 1700 to 1800 $cm^{-1}$ ($D_{1750}$) and that due to skeletal vibration of polypropylene at 1170 $cm^{-1}$ ($D_{1170}$) are calculated from chart areas to calculate an absorbance ratio ($D_{1750}/D_{1170}$). The smaller absorbance ratio means the less oxidation, namely better heat stability.

Heat stability test (3)

A test sample of 1 mm in thickness is aged in an oven at 180°C in the air. Color difference before and after aging is measured with an S & M Color Computer (trade mark) (manufactured by Suga Testing Machines Co., Ltd.) The smaller color difference means the smaller color change, namely better heat stability.

Examples 1-9

A resin, a heat stabilizer, a hindered-amine based weather stabilizer and a hypophosphite compound as shown in Table 1 were compounded and kneaded with a Banbury mixer at 150°C for 5 minutes. Then, the mixture was granulated with an extruder to produce pellets. The pellets were molded by inflation molding to form a film of 50 µm in thickness, which was subjected to the weathering test (1).

The pellets were press molded to form a sheet of 1 mm in thickness, which was subjected to the heat stability tests (1) and (3).

As shown in Table 1, both the weather resistance and the heat stability were good.

Comparative Examples 1-4

The same tests as in Examples 1-4 were repeated without using the hypophosphite compound. The results are shown in Table 1. The weather resistance and the heat stability were poor.

Table 1

| Example No. | Composition (parts) | | | |
|---|---|---|---|---|
| | Resin | Heat stabilizer | Weathering stabilizer | Hypophosphite |
| 1 | A1[1] (100) | B1[2] (0.1) | C1[4] (0.35) | Sodium hypophosphite (0.2) |
| 2 | A1 (100) | B1 (0.1) | C2[5] (0.35) | ↑ (0.2) |
| 3 | A1 (100) | B1 (0.1) | C3[6] (0.35) | ↑ (0.2) |
| 4 | A1 (100) | B1 (0.1) + B2[3] (0.2) | C2 (0.35) | ↑ (0.2) |
| 5 | A1 (100) | B1 (0.1) | C3 (0.35) | Potassium hypophosphite (0.2) |
| 6 | A1 (100) | B1 (0.1) | C3 (0.35) | Magnesium hypophosphite (0.2) |
| 7 | A1 (100) | B1 (0.1) | C3 (0.35) | Manganese hypophosphite (0.2) |
| 8 | A1 (100) | B1 (0.1) | C1 (0.35) | Cetyltrimethylammonium hypophosphite (0.6) |
| 9 | A1 (100) | B1 (0.1) | C1 (0.35) | Tetrabutylammonium hypophosphite (0.6) |
| Com.1 | A1 (100) | B1 (0.1) | C1 (0.35) | --- |
| Com.2 | A1 (100) | B1 (0.1) | C2 (0.35) | --- |
| Com.3 | A1 (100) | B1 (0.1) | C3 (0.35) | --- |
| Com.4 | A1 (100) | B1 (0.1) + B2 (0.2) | C2 (0.35) | --- |

Table 1 (continued)

| Example No. | Weathering test | Heat stability test | |
|---|---|---|---|
| | Half value period (hrs.) | Induction period for oxygen absorbance (min.) | Color difference (180°C, 5 hrs.) |
| 1 | 620 | 20 | 15 |
| 2 | 630 | 21 | 13 |
| 3 | 510 | 25 | 15 |
| 4 | 560 | 30 | 8 |
| 5 | 500 | 23 | 14 |
| 6 | 480 | 22 | 16 |
| 7 | 490 | 22 | 17 |
| 8 | 500 | 21 | 15 |
| 9 | 630 | 23 | 16 |
| Com.1 | 320 | 5 | 66 |
| Com.2 | 410 | 4 | 64 |
| Com.3 | 325 | 8 | 45 |
| Com.4 | 420 | 17 | 21 |

Note:

1) A1: Sumikathene (trademark) F 208-0 (manufactured by Sumitomo Chemical Co., Ltd.)

Low molecular weight polyethylene (MI: 1.5 g/min., density: 0.922 $g/cm^3$).

2) B1: Sumilizer (trademark) BHT (manufactured by Sumitomo Chemical Co., Ltd.)

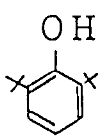

3) B2: Sumilizer (trademark) P-16 (manufactured by Sumitomo Chemical Co., Ltd.)

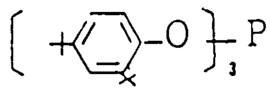

4) C1: Chimassorb (trademark) 944 LD (manufactured by Ciba Geigy)

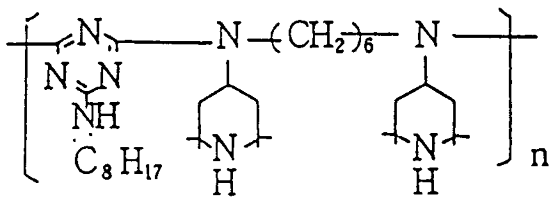

5) C2: Cyasorb (trademark) UV-3346 (manufactured by American Cyanamide Company)

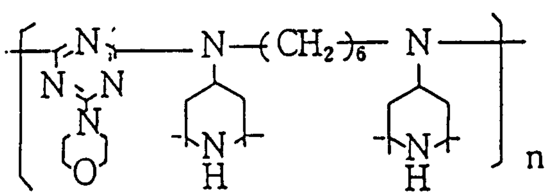

6) C3: Tinuvin (trademark) 622 LD (manufactured by Ciba Geigy)

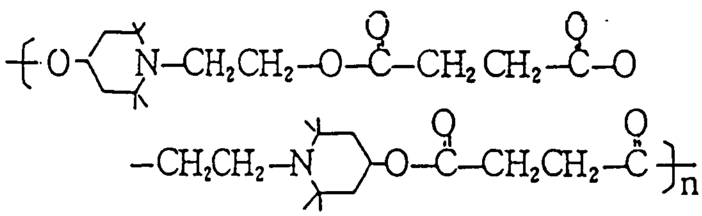

Example 10

A resin, a heat stabilizer, a weather stabilizer, a neutralizing agent, a UV light absorber and a hypophosphite compound shown in Table 2 were dry blended and granulated with a single screw extruder to produce pellets. Then, the pellets were injection molded to form a test sample in the form of a JIS No. 3 dumbbell of 2 mm in thickness, which was subjected to the weathering test (2) and the heat stability test (2). As shown in Table 2, the weather resistance and the heat stability were excellent.

Comparative Example 5

The same tests as in Example 10 were repeated without using sodium hypophosphite. As shown in Table 2, the weather resistance and the heat stability were poor.

Table 2

| Example No. | Composition (parts) | | | | | |
|---|---|---|---|---|---|---|
| | Resin | Heat stabilizer | Weather stabilizer | Neutralizing agent | UV absorber | hypophosphite |
| 10 | A2[1) ] (100) | B2[2)] (0.05) | C4[3)] (0.1) | D[4)] (0.05) | E[5)] (0.05) | Sodium hypophosphite (0.2) |
| Com.5 | A2 (100) | B2 (0.05) | C4 (0.1) | D | E | --- |

Table 2 (continued)

| Example No. | Weathering test (2) Illumination time (hrs) | | | | | | Heat stability test (180°C x 20 hrs.) $D_{1750}/D_{1170}$ |
|---|---|---|---|---|---|---|---|
| | 25 | 50 | 75 | 100 | 125 | 150 | |
| 10 | A | A | A | A | B | D | 0.34 |
| Comp. 5 | A | A | B | C | D | D | 0.88 |

Note:

1) A2: Sumitomo Noblen (trademark) W 501 (manufactured by Sumitomo Chemical Co., Ltd.)

Polypropylene (MI 8 g/10 min.)

2) B2: Sumilizer (trademark) P-16 (manufactured by Sumitomo Chemical Co., Ltd.)

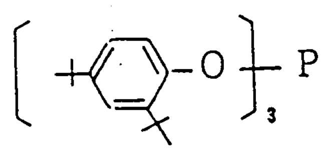

3) C4: Sanol (trademark) LS-770 (manufactured by Sankyo)

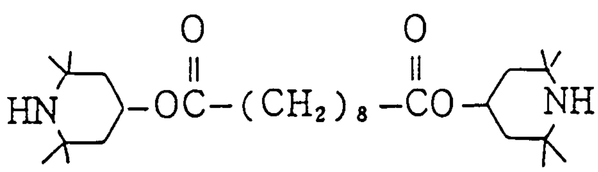

4) D: Calcium stearate

5) E: Sumisorb (trademark) 300 (manufactured by Sumitomo Chemical Co., Ltd.)

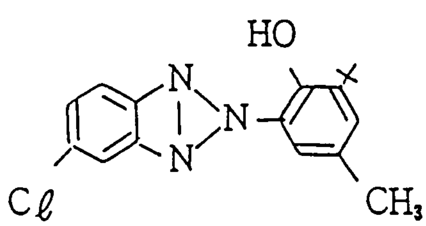

Examples 11-17

A resin, a heat stabilizer, a hindered-amine based weather stabilizer, diglycerin sesquiolate and a hypophosphite compound as shown in Table 3 were compounded and kneaded with a Banbury mixer at 150 °C for 5 minutes. Then, the mixture was granulated with an extruder to produce pellets. The pellets

were molded by inflation molding to form a film of 75 µm in thickness, which was subjected to the weathering test (1).

The pellets were press molded to form a sheet of 1 mm in thickness, which was subjected to the heat stability test (3). As shown in Table 3, the weather resistance and the heat resistance were both excellent.

Comparative Examples 6-9

The same tests as in Examples 11-14 were repeated without using sodium hypophosphite. As shown in Table 3, the weather resistance and the heat stability were poor.

Table 3

| Example No. | Composition (parts) | | | | |
|---|---|---|---|---|---|
| | Resin | Heat stabilizer | Weather stabilizer | Diglycerin sesquiolate | Sodium hypophosphite |
| 11 | A3[1)] (100) | B3[3)] (0.3) | C1[4)] (0.35) | 1.5 | 0.2 |
| 12 | A4[2)] (100) | B3 (0.3) | C1 (0.35) | 1.5 | 0.2 |
| 13 | A3 (100) | B3 (0.3) | C3[5)] (0.35) | 1.5 | 0.2 |
| 14 | A4 (100) | B3 (0.3) | C3 (0.35) | 1.5 | 0.2 |
| 15 | A3 (100) | B3 (0.3) | C1 (0.35) | 1.5 | 0.05 |
| 16 | A3 (100) | B3 (0.3) | C1 (0.35) | 1.5 | 0.4 |
| 17 | A3 (100) | B3 (0.3) | C1 (0.35) | 1.5 | 2.0 |
| Com.6 | A3 (100) | B3 (0.3) | C1 (0.35) | 1.5 | --- |
| Com.7 | A4 (100) | B3 (0.3) | C1 (0.35) | 1.5 | --- |
| Com.8 | A3 (100) | B3 (0.3) | C3 (0.35) | 1.5 | --- |
| Com.9 | A4 (100) | B3 (0.3) | C3 (0.35) | 1.5 | --- |

Table 3 (continued)

| Example No. | Weathering test Half value period (hrs) | Heat stability test Color difference (180°C x 30 hrs) |
|---|---|---|
| 11 | 1100 | 15 |
| 12 | 1000 | 15 |
| 13 | 650 | 13 |
| 14 | 630 | 18 |
| 15 | 900 | 20 |
| 16 | 1200 | 12 |
| 17 | 1300 | 10 |
| Comp.6 | 650 | 35 |
| Comp.7 | 610 | 40 |
| Comp.8 | 350 | 30 |
| Comp.9 | 370 | 32 |

Note:

1) A3: Evatate (trademark) D 2043 (manufactured by Sumitomo Chemical Co., Ltd.)

Ethylene-vinyl acetate copolymer (MI: 2.0 g/10 min.)

2) A4: Acryft (trademark) WD 201 (manufactured by Sumitomo Chemical Co., Ltd.)

Ethylene-vinyl acetate copolymer (MI: 2.0 g/10 min.).

3) B3: Sumilizer (trademark) BP 101 (manufactured by Sumitomo Chemical Co., Ltd.)

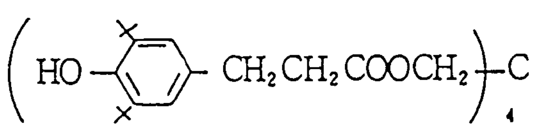

4) C1: Chimassorb (trademark) (manufactured by Ciba Geigy)

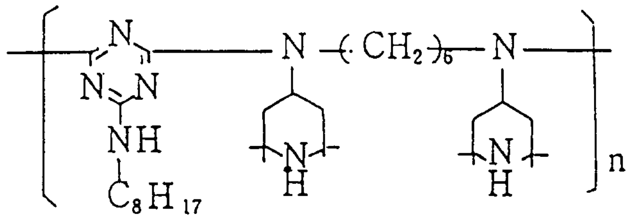

5) C3: Tinuvin (trademark) (manufactured by Ciba Geigy)

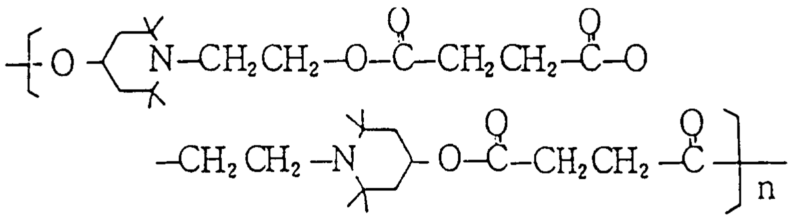

Examples 18-20

A resin, a heat stabilizer, a hindered-amine based weather stabilizer and a hypophosphite compound as shown in Table 4 were compounded and kneaded with a Banbury mixer at 150 ° C for 5 minutes. Then, the mixture was granulated with an extruder to produce pellets. The pellets were press molded to form a sheet of 1 mm in thickness, which was subjected to the weathering test (2) and the heat stability test (1) at a vessel temperature of 215 ° C.

As shown in Table 4, the weather resistance and the heat resistance were both excellent.

Comparative Examples 10-12

The same tests as in Examples 18-20 were repeated without using sodium hypophosphite. As shown in Table 4, the weather resistance and the heat resistance were poor.

Table 4

| Example No. | Composition (parts) | | | |
|---|---|---|---|---|
| | Resin | Heat stabilizer | Weather stabilizer | Sodium hypophosphite |
| 18 | A5[1] (100) | B1[4] (0.1) | C1[5] (1.0) | 0.2 |
| 19 | A6[2] (100) | B1 (0.1) | C1 (0.3) | 0.2 |
| 20 | A7[3] (100) | B1 (0.1) | C1 (0.3) | 0.2 |
| Com.10 | A5 (100) | B1 (0.1) | C1 (1.0) | --- |
| Com.11 | A6 (100) | B1 (0.1) | C1 (0.3) | --- |
| Com.12 | A7 (100) | B1 (0.1) | C1 (0.3) | --- |

Table 4 (continued)

| Example No. | Weathering test Illumination time (hrs.) | | | | | Heat stability test Induction period for oxygen absorption (minutes) |
|---|---|---|---|---|---|---|
| | 20 | 40 | 60 | 80 | 120 | |
| 18 | A | A | A | A | A | 20 |
| 19 | A | A | A | A | A | 100< |
| 20 | A | A | A | A | A | 95 |
| Comp.10 | A | A | A | C | D | 5 |
| Comp.11 | A | A | C | D | D | 0 |
| Comp.12 | A | A | A | C | D | 25 |

Note:

1) A5: Bondfast (trademark) MPE 131 (manufactured by Sumitomo Chemical Co., Ltd.)
Modified polypropylene.

2) A6: Bondine LX 4110 (manufactured by Sumitomo Chemical Co., Ltd.)

Ethylene-acrylic acid-maleic anhydride copolymer.

3) A7: Sumifirm (trademark) 104 (manufactured by Sumitomo Chemical Co., Ltd.)

Modified linear low density polyethylene.

4) B1 Sumilizer (trademark) BHT (manufactured by Sumitomo Chemical Co., Ltd.)

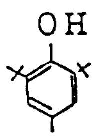

5) C1: Chimassorb (trademark) 944 LD (manufactured by Ciba Geigy).

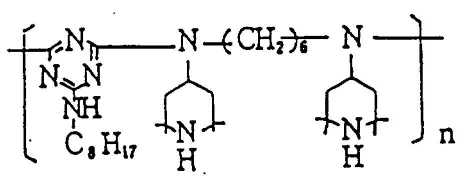

## Claims

1. A resin composition having good heat stability and weather resistance, comprising an olefin polymer, a heat stabilizer, a hindered amine weathering stabilizer and a hypophosphite compound, characterized in that said heat stabilizer is at least one member selected from the group consisting of 2,6-dialkylphenol derivatives, 2-alkylphenol derivatives, sulfur-containing compounds having a thiol or thioether linkage containing a divalent sulfur atom and compounds having a phosphite ester linkage containing a trivalent phosphorus atom, and said hindered amine weathering stabilizer is at least one member selected from the group consisting of 2,2,6,6-tetralkylpiperidine derivative having a substituent at the 4-position and a molecular weight of not smaller than 250.

2. The resin composition according to claim 1, which contains 0.01 to 10 parts by weight of the heat stabilizer and 0.01 to 10 parts by weight of the hindered-amine based weather stabilizer per 100 parts by weight of the resin.

## Patentansprüche

1. Harzmasse mit guter Wärmestabilität und Wetterbeständigkeit, umfassend ein Olefinpolymer, einen Wärmestabilisator, ein gehindertes Amin als Verwitterungsstabilisator und eine Hypophosphit-Verbindung, dadurch gekennzeichnet, daß der Wärmestabilisator mindestens einer aus der Gruppe der 2,6-Dialkylphenolderivate, 2-Alkylphenolderivate, Schwefel enthaltende Verbindungen mit einer Thiol- oder Thioetherbindung, die ein zweiwertiges Schwefelatom enthalten, und Verbindungen mit einer Phosphitesterbindung, die ein dreiwertiges Phosphoratom enthalten, ist, und daß das gehinderte Amin, das als

Verwitterungsstabilisator dient, mindestens eines aus der Gruppe der 2,2,6,6-Tetraalkylpiperidinderivate mit einem Substituent in 4-Stellung und einem Molekulargewicht von nicht weniger als 250 ist.

**2.** Harzmasse nach Anspruch 1 enthaltend 0,01 bis 10 Gew.-Teile des Wärmestabilisators und 0,01 bis 10 Gew.-Teile des Verwitterungsstabilisators auf der Basis eines gehinderten Amins pro 100 Gew.-Teile des Harzes.

**Revendications**

**1.** Composition de résine présentant une bonne stabilité thermique et une bonne résistance aux intempéries, comprenant un polymère d'oléfine, un stabilisant à la chaleur, un stabilisant aux intempéries à base d'amine encombrée et un composé hypophosphite, caractérisée en ce que ledit stabilisant à la chaleur est au moins un élément choisi dans le groupe constitué de dérivés de 2,6-dialkylphénol, de dérivés de 2-alkylphénol, de composés soufrés présentant une liaison thiol ou thioéther contenant un atome de soufre divalent et de composés présentant une liaison ester de type phosphite contenant un atome de phosphore trivalent, et dans laquelle ledit stabilisant aux intempéries à base d'amine encombrée est au moins un élément choisi dans le groupe constitué d'un dérivé de 2,2,6,6-tétraalkylpipéridine présentant un substituant en position 4 et une masse moléculaire supérieure ou égale à 250.

**2.** Composition de résine selon la revendication 1, laquelle contient de 0,01 à 10 parties en masse du stabilisant à la chaleur et de 0,01 à 10 parties en masse du stabilisant aux intempéries à base d'amine encombrée pour 100 parties en masse de la résine.